# EUROPEAN PATENT SPECIFICATION

(11) **EP 3 625 122 B1**
(45) Date of publication and mention of the grant of the patent: **28.08.2024**
(21) Application number: 18724981.8
(22) Date of filing: 17.05.2018
(51) Int. Cl.: B64C 1/14

(54) **DOOR ASSEMBLY FOR A VEHICLE**
TÜRRAHMEN FÜR EIN FAHRZEUG
ENSEMBLE DE PORTE POUR VÉHICULE

(30) Priority: 18.05.2017 GB 201708010; 18.05.2017 EP 17171830
(43) Date of publication of application: 25.03.2020
(73) Proprietor: BAE Systems PLC, London SW1Y 5AD (GB)
(72) Inventor: SMITH, Jamie, Adam, Preston, Lancashire PR4 1AX (GB); HORROCKS, Gawain, Preston, Lancashire PR4 1AX (GB); SHARPLES, Jack, Richard, Preston, Lancashire PR4 1AX (GB)
(74) Representative: BAE SYSTEMS plc Group IP Department
(86) International application number: PCT/GB2018/000085
(87) International publication number: WO 2018/211234

(56) References cited:
- EP-A1- 0 532 016
- EP-A1- 2 554 471
- EP-A1- 2 876 044
- EP-A1- 2 987 720
- WO-A1-2016/023056
- WO-A1-88/09289
- WO-A1-99/26841
- DE-A1- 19 936 174
- JP-A- S63 278 821
- US-A1- 2009 101 756
- DATABASE WPI Week 201410, Derwent World Patents Index; AN 2014-B86131, XP002775824

## Description

### FIELD OF THE INVENTION

The present invention relates to door assemblies for vehicles and the fabrication thereof.

### BACKGROUND

Conventionally, many structural components of aircraft are fabricated by individually making elements of those components, and subsequently assembling them into the final component using mechanical fasteners. For example, in an aircraft bay door assembly, an aircraft bay door may be fixed to a hinge mechanism using mechanical fasteners. The hinge may be further attached to an aircraft substructure or fuselage using mechanical fasteners.

Such use of mechanical fasteners tends to necessitate drilling and countersinking holes, reaming and cleaning holes, and installing mechanical fasteners. Furthermore, the use of mechanical fasteners tends to necessitate labour-intensive manufacturing, adds mass, and inhibits homogeneity of mating surfaces.

Adhesive bonding methods have been employed in certain applications.

US2009101756 describes a composite panel having a first skin forming the outer wall of the panel, known as the lower face, and a second skin forming part of the inner wall of the panel.

JP201401246 describes an aircraft member that is highly lightweight.

EP2554471 relates to a loads interface of an aircraft structure with an edge member and a background structure both preferably made from fibre reinforced plastics.

EP0532016 relates to the manufacture of composite load bearing structures, and in particular to the manufacture of an aircraft wing spoiler of honeycomb sandwich construction.

WO2016 023056 relates to a control surface element for an aircraft.

DE19936174 describes a door for a vehicle that can absorb high forces in the event of a side impact on a vehicle.

JPS63278821 relates to a joining method for joining small parts to synthetic resin products.

EP2876044 describes a passenger door corner component and a manufacturing method for passenger door corner components of aircraft or spacecraft.

WO8809289 utilises projections formed in the wing skin to mate with recesses formed in a support substructure thus forming interdigitations which prevent sliding displacement of the wing skin.

EP2987720 relates generally to hat stringer fittings, and, more particularly, to a closeout fitting for a hat stringer that includes a trimmed end.

WO9926841 describes a method for making a single-piece composite panel designed to be articulated on a support, in particular a panel articulated with brackets for producing a turbojet spinner or an aircraft landing gear door.

### SUMMARY OF THE INVENTION

In a first aspect, the present invention provides a door assembly for a vehicle as defined in claim 1.

At least a part of the stiffening structure may be substantially the same size and shape as the volume in which it is located. The first side walls of the stiffening structure may taper outwards from the first wall to the surface of the door. The second side walls may taper outwards from the second wall to their distal edges opposite to the second wall.

The stiffening structure may comprise a plurality of connected stiffening elements oriented in multiple different directions. The at least a part of the stiffening structure that is located in the volume may comprise a plurality of the stiffening elements oriented in multiple different directions. The second wall may have a shape selected from the group of shapes consisting of: a H-shape, a I-shape a C-shape, a S-shape, a J-shape, a L-shape, a T-shape, a U-shape, a F-shape, a Y-shape and a X-shape.

The stiffening structure may comprise a thermoplastic fibre-reinforced composite material. The stiffening structure comprises a short fibre-reinforced composite material comprising short fibres embedded in a polymer matrix, the short fibres having lengths of less than or equal to 50mm. Each of the one or more protrusions has a length of less than or equal to 2mm, for example less than or equal to 1mm.

The hinge member may be a metal or alloy hinge member. The hinge member may have been produced using an Additive Manufacturing process.

The vehicle may be an aircraft and the door may be an aircraft door.

In a further aspect, the present invention provides a vehicle (e.g. an aircraft) comprising a door assembly according to any preceding aspect.

In a further aspect, the present invention provides a method for fabricating a door assembly for a vehicle as defined in claim 14.

### BRIEF DESCRIPTION OF THE DRAWINGS

Figure 1 is a schematic illustration of an example aircraft;
Figure 2 is a schematic illustration of a perspective view of an aircraft door assembly of the aircraft;
Figure 3 is a schematic illustration of a plan view of the aircraft door assembly;
Figure 4 is a schematic illustration of a side view cross section of the aircraft door assembly at a hinge position;
Figure 5 is a schematic illustration of a bottom view of a first member of a hinge assembly;
Figure 6 is a schematic illustration of a side view of the first member;
Figure 7 is a schematic illustration of a plan view of the first member;
Figure 8 is schematic illustration of a portion of a bond surface of the first member;
Figure 9 is a process flow chart showing certain steps of process of producing the aircraft door assembly;
Figure 10 is a schematic illustration of a stage of the aircraft door assembly process;
Figure 11 is a schematic illustration of a stage of the aircraft door assembly process;
Figure 12 is a schematic illustration (not to scale) showing further details of a fastenerless join structure between the stiffening structure and the first member;
Figure 13 is a schematic illustration of a yet further stage of the aircraft door assembly process;
Figure 14 is a process flow chart showing certain steps of a process of producing the aircraft door stiffening structure;
Figure 15 is a schematic illustration of a stiffening structure mould moulding the aircraft door stiffening structure; and
Figure 16 is a schematic illustration of a further fastenerless join structure.

### DETAILED DESCRIPTION

It will be appreciated that relative terms such as horizontal and vertical, top and bottom, above and below, front and back, and so on, are used below merely for ease of reference to the Figures, and these terms are not limiting as such, and any two differing directions or positions and so on may be implemented rather than truly horizontal and vertical, top and bottom, and so on.

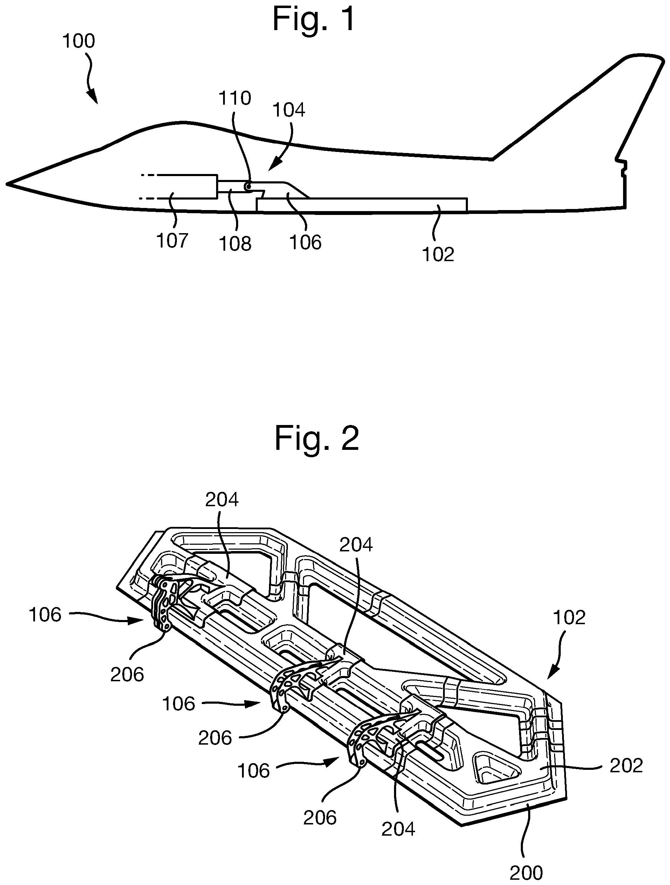

Figure 1 is a schematic illustration (not to scale) of an aircraft 100 in which an embodiment of a fastenerless join structure is implemented. The term "fastenerless" is used here to refer to a join in which two or more elements are fixed (i.e. attached) together without the use of mechanical fasteners including, but not limited to, bolts, screws, nails, clamps, and rivets.

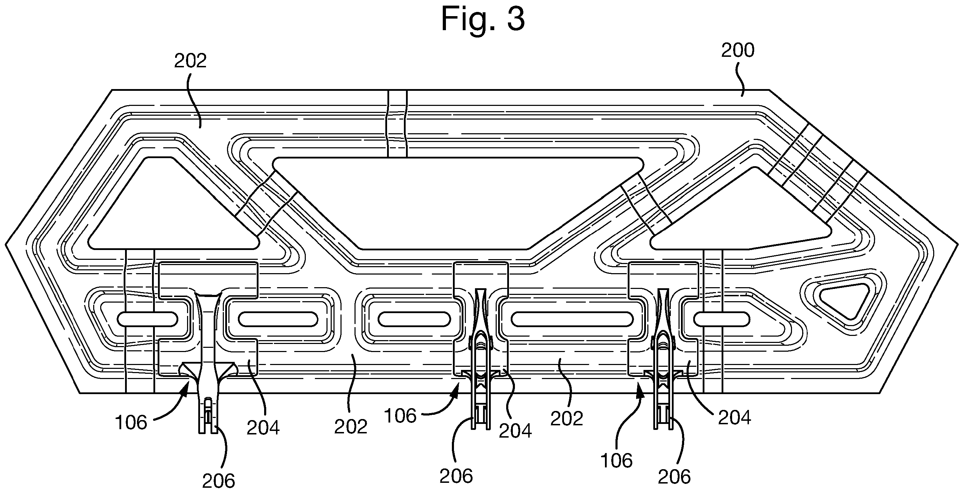

The aircraft 100 comprises an aircraft door 102 secured, by a hinge assembly 104, to an aircraft fuselage 107. Although only a single hinge assembly 104 is illustrated in Figure 1 for ease of depiction, in this embodiment, the aircraft door 102 is attached to the fuselage 107 by multiple hinge assemblies 104. In particular, in this embodiment, the aircraft door 102 is attached to the fuselage 107 by three hinge assemblies 104, as shown in Figures 2 and 3, which are described in more detail later below.

The hinge assemblies 104 enable the aircraft door 102 to be opened and closed, i.e. to be moved out of and into an opening formed in the fuselage 107. The aircraft door 102 may be opened and closed via any suitable actuation means (not shown). The aircraft door 102 may be opened and closed in-flight. Thus the hinge assemblies 104 may be in-flight openable hinge assemblies.

In this embodiment, each hinge assembly 104 comprises a respective first member 106 and a second member 108 pivotally attached to the first member 106 via a pivot shaft 110. The first member 106 of each hinge assembly 104 is fixedly attached to the aircraft door 102 at a fastenerless join structure. This fastenerless join structure and its fabrication will be described in more detail later below. The second member 108 of each hinge assembly 104 is fixedly attached to the aircraft fuselage 107 by any appropriate fastening means, for example using one or more mechanical fasteners, welding, adhesive bonding, and/or using the below described fastenerless join structure.

Figure 2 is a schematic illustration (not to scale) showing further details of the aircraft door 102 and first members 106 of the multiple hinge assemblies 104 attached thereto. Figure 2 shows a perspective view of the aircraft door 102 and the first members 106 attached thereto.

Figure 3 is a schematic illustration (not to scale) of a plan view of the aircraft door 102 and first members 106 attached thereto.

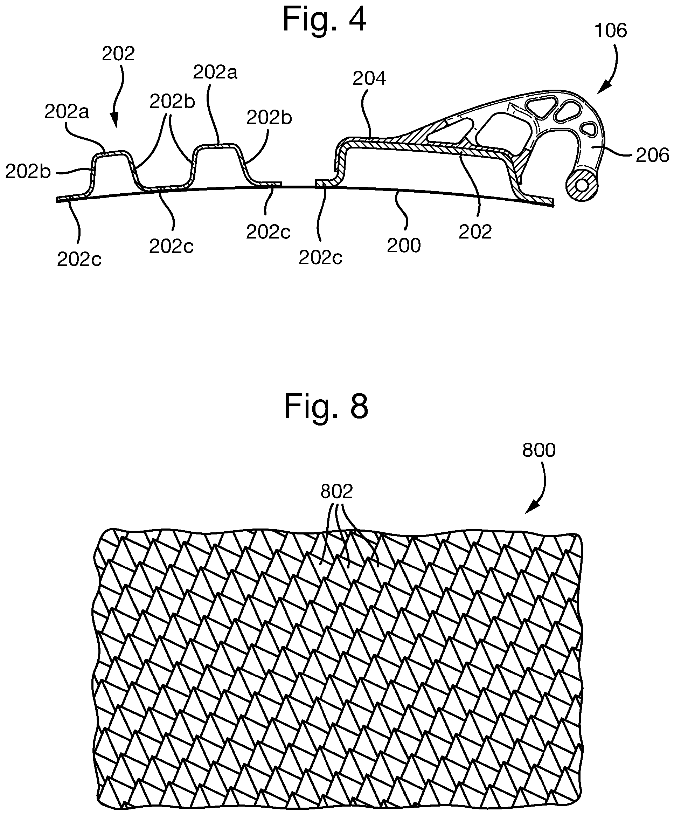

Figure 4 is a schematic illustration (not to scale) of a side view cross section of the aircraft door 102 a first member 106 attached thereto.

In this embodiment, the aircraft door 102 comprises a door panel 200 and a stiffening structure 202.

The door panel 200 is made of a composite material, in particular a continuous carbon fibre-reinforced thermoplastic composite. The continuous fibre-reinforced thermoplastic composite material is a composite material that comprises (e.g. high-performance or aerospace grade) continuous carbon fibres that are embedded in a matrix of thermoplastic(s), such as a polyaryletherketone (PAEK), for example polyetheretherketone (PEEK). The terminology "long fibres" and "continuous fibres" is used herein to refer to long fibres having a length of more than about 50mm, e.g. more than about 60mm, more than about 80mm, or more than about 100mm. Long fibres may, for example, have a general aspect ratio (defined as the ratio of fibre length to diameter) of greater than or equal to about 200, for example between about 200 and 500, e.g. about 200, 300, 400, or 500.

The lower surface of the door panel 200 is an external surface of the aircraft door 102 and conforms to an outer mould line (OML) of the aircraft 100. The upper surface of the door panel 200, which is opposite to the lower surface of the door panel 200, is an interior surface of the aircraft door 102.

The stiffening structure 202 is made of a composite material. Preferably, the stiffening structure is made of a carbon fibre composite (CFC) having the same thermoplastic polymer as the composite material from which the door panel 200 is made. In this embodiment, the stiffening structure 202 is made of a short carbon fibre-reinforced thermoplastic composite. The short fibre-reinforced thermoplastic composite material is a composite material that comprises short or "discontinuous" carbon fibres that are embedded in a matrix of thermoplastics, such as a polyaryletherketone (PAEK), for example polyetheretherketone (PEEK). The terminology "short fibres" and "discontinuous fibres" is used herein to refer to short fibres having a length of less than or equal to about 50mm, e.g. less than or equal to about 40mm, less than or equal to about 30mm, less than or equal to about 20mm, less than or equal to about 10mm, or more preferably less than or equal to about 5mm. Short fibres may, for example, have a general aspect ratio of less than or equal to about 100, for example less than or equal to about 60, e.g. between about 20 and 60, e.g. about 20, 30, 40, 50 or 60.

The stiffening structure 202 is fixedly attached to the upper surface of the door panel 200, i.e. to the interior surface of the door panel 200. The stiffening structure 202 comprises a plurality of connected longitudinal and transverse stiffening elements/stiffeners arranged on the upper surface of the door panel 200. The stiffening elements of the stiffening structure 202 are arranged to form a frame on the upper surface of the door panel 200 along the edges of the upper surface of the door panel 200, and to form crossbeams connected between opposite sides of the frame. The stiffening structure 202 could be considered complex in shape in that it is a connected web of stiffeners.

As shown in Figure 4, the stiffening structure 202 comprises a top surface 202a, side walls 202b, and flange 202c. The flange 202c is disposed against and fixedly attached to the upper surface of the door panel 200. The side walls 202b extend upwardly from the flange 202c to the top surface 202a, thereby spacing apart the upper surface of the door panel 200 and the top surface 202a. The side walls 202b are tapered such that a distance between the side walls 202b at and proximate to the flange 202c is greater than a distance between the side walls 202b at and proximate to the top surface 202a. In other words, the side walls 202b taper inwards from the flange 202c to the top surface 202a. The stiffeners may be considered corrugated in shape. The top surface 202a and side walls 202b define a cavity (a hollow) when the flange 202c is fixedly attached to the upper surface of the door panel 200.

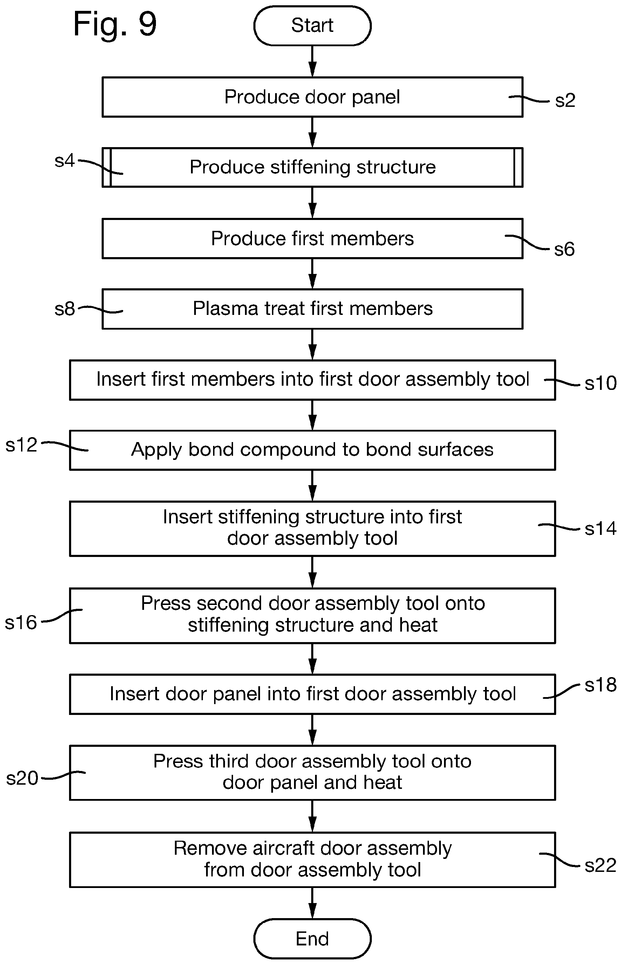

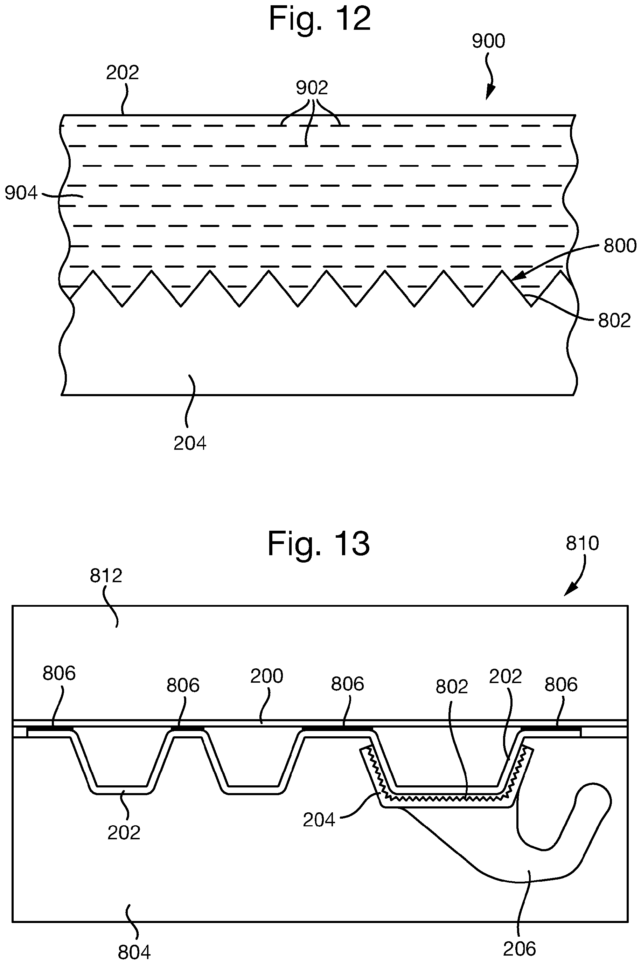

The stiffening structure 202, its construction, and its attachment to the door panel 200 are described in more detail later below with reference to Figures 9 and 13.

The first members 106 are joined or fixed to the stiffening structure 202, without the use of mechanical fasteners, such as bolts or rivets. Thus, the fixed together first members 106 and the stiffening structure 202 may be considered to be fastenerless join structures. The fastenerless joining or attachment of the first members 106 to the stiffening structure 202 will be described in more detail later below with reference to Figure 9.

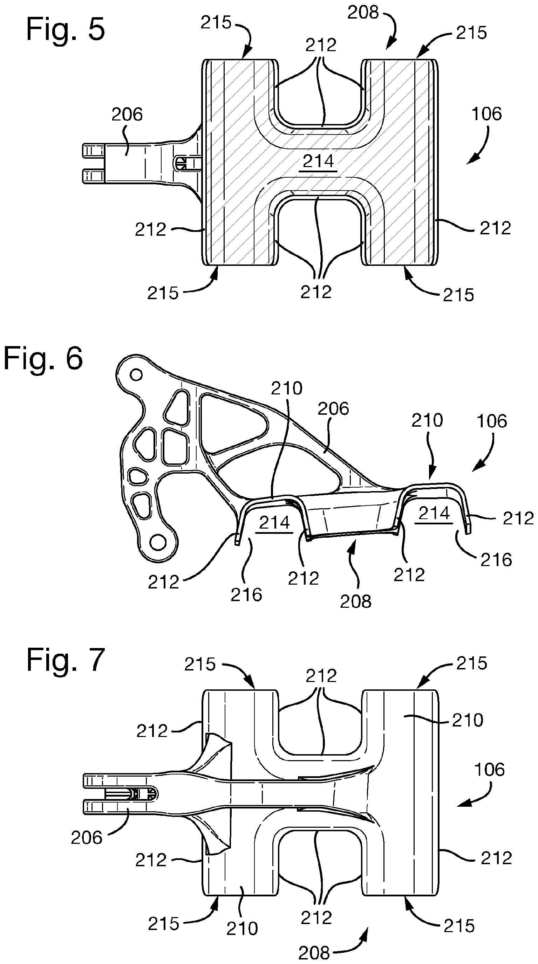

Further details of the first members 106 will now be described with reference to Figures 5-8, where Figure 5 is a schematic illustration (not to scale) showing a bottom view of a first member 106, Figure 6 is a schematic illustration (not to scale) showing a side view of the first member 106, and Figure 7 is a schematic illustration (not to scale) showing a plan view (i.e. top view) of the first member 106.

In this embodiment, the first member 106 is a single monolithic piece. The first member 106 is made of a titanium alloy, for example, Ti-6AI-4V. The first member 106 comprises a base portion 204 and a hinge arm 206.

The base portion 204 is a substantially H-shaped or I-shaped member when viewed in plan view (as in Figures 3 and 7).

The base portion 204 comprises a substantially H-shaped (or I-shaped) top wall 210, and side walls 212 extending therefrom. The hinge arm 206 extends from a top surface of the top wall 210. The top wall 210 and side walls 212 define a volume 214. The side walls 212 extend downwards from the all of the edges of the H-shaped top wall 210, except the edges at the ends of the arms of the H-shaped top wall 210. Thus, the volume 214 has side openings 215, as indicated by arrows in Figures 5 and 7. The volume 214 has a bottom opening 216 (indicated in Figure 6) which is defined by the distal edges of the side walls 212, i.e. the lower edges of the side walls 212 opposite to the upper edges of the side walls that are connected to the top wall 210. In this embodiment, the side walls 212 taper outwards from the top surface 210 to the opening 216, such that the opening 216 is larger in cross-section than the top wall 210.

In this embodiment, the base portion 204 is complementary to the portion of the stiffening structure 202 to which it is fixed. In other words, the shape of the volume 214 defined by the top and side walls 210, 212 is substantially the same as that of the part of the stiffening structure 202 to which the first member 106 is attached. Thus, when the first member 106 is fixed onto the stiffening structure 202 (e.g. as shown in Figures 2-4), the stiffening structure fits snugly into the volume 214 defined by the top and side walls 210, 212 of the base portion 204, such that the stiffening structure 202 contacts the internal surfaces of the top and side walls 212, 214.

In this embodiment, the internal surfaces of the top and side walls 210, 212 are surfaces that are bonded (joined securely) to the stiffening structure 202 and are, therefore, hereinafter referred to as "bond surfaces". These bond surfaces (which are indicated by hatching in Figure 5) are uneven or textured surfaces.

Figure 8 is schematic illustration (not to scale) showing further details of part of such a bond surface 800, i.e. an interior surface of the top and/or side walls 210, 212.

In this embodiment, the bond surface 800 comprises a plurality of protrusions (some of which are indicated in Figure 8 by the reference numeral 802) which extend from the bond surface 800 (i.e. the interior surface of the wall 210, 212) into the volume 214. The protrusions may be pyramids. In this embodiment, the protrusions 802 are square-based pyramids in shape. The protrusions 802 taper from their proximal ends, to nothing at their distal ends. The protrusions 802 are contiguous over some or all of the bond surface 800. The protrusions 802 are less than or equal to about 2mm long (i.e. less than or equal to about 2mm from their proximal ends to their distal ends). More preferably, the protrusions 802 are less than or equal to about 1mm long. For example, the protrusions 802 may be about 1mm, 0.9mm, 0.8mm, 0.7mm, 0.6mm, 0.5mm, 0.4mm, 0.3mm, 0.2mm, or 0.1 mm in length. Also for example, the protrusions 802 may have lengths of less than or equal to about 0.9mm, less than or equal to about 0.8mm, less than or equal to about 0.7mm, less than or equal to about 0.6mm, less than or equal to about 0.5mm, less than or equal to about 0.4mm, less than or equal to about 0.3mm, less than or equal to about 0.2mm, or less than or equal to about 0.1mm. The protrusions may have a minimum length of about 0.9mm, 0.8mm, 0.7mm, 0.6mm, 0.5mm, 0.4mm, 0.3mm, 0.2mm, 0.1mm, 0.09mm, 0.075mm, 0.005mm or 0.0025mm. The protrusions have a maximum width of less than or equal to about 1mm, i.e. the size of a side of the base of a square-based pyramid protrusion 802 is less than or equal to about 1mm. For example, the base of a protrusion 802 may be about 1mm, 0.9mm, 0.8mm, 0.7mm, 0.6mm, 0.5mm, 0.4mm, 0.3mm, 0.2mm, or 0.1 mm. Also for example, the protrusions 802 may have base widths of less than or equal to about 0.9mm, less than or equal to about 0.8mm, less than or equal to about 0.7mm, less than or equal to about 0.6mm, less than or equal to about 0.5mm, less than or equal to about 0.4mm, less than or equal to about 0.3mm, less than or equal to about 0.2mm, or less than or equal to about 0.1mm.

The protrusions 802 are located on bond surfaces 800 of the first member 106, i.e. those surfaces that are in contact with and bonded to the stiffening structure 202. Advantageously, the protrusions 802 tend to provide an increased surface area for the bond surfaces 800, and act as a `key' or promoter between the first members 106 and the stiffening structure 202. Thus, improved bond strength between the first members 106 and the stiffening structure 202 tends to be provided. This is particularly the case when the protrusions are pyramid shaped, as the pyramids generally provide additional surface area for bonding (for example, when compared to rod shaped protrusions of the same length).

Thus, an aircraft door assembly is described. What will now be described is a process for fabricating the aircraft door assembly.

Figure 9 is a process flow chart showing certain steps of an embodiment of a method of fabricating the aircraft door assembly described in more detail earlier above with reference to Figures 2-8.

At step s2, the door panel 200 is produced.

The door panel 200 may be produced in any appropriate way. For example, in some embodiments uncured composite material (e.g. in the form of multiple sheets of carbon fibres that have been pre-impregnated with thermoplastic polymer matrix material) is laid against a mould surface of an aircraft door panel mould tool and secured thereon. The mould surface of the aircraft panel mould tool may be the same as a desired OML for the aircraft door 102. The aircraft door panel mould tool and the uncured composite material thereon may then be heated, e.g. in an autoclave, to form the composite material against the mould surface. Thereafter, the composite material is allowed to cool, resulting in the CFC door panel 200.

At step s4, the stiffening structure 202 is produced.

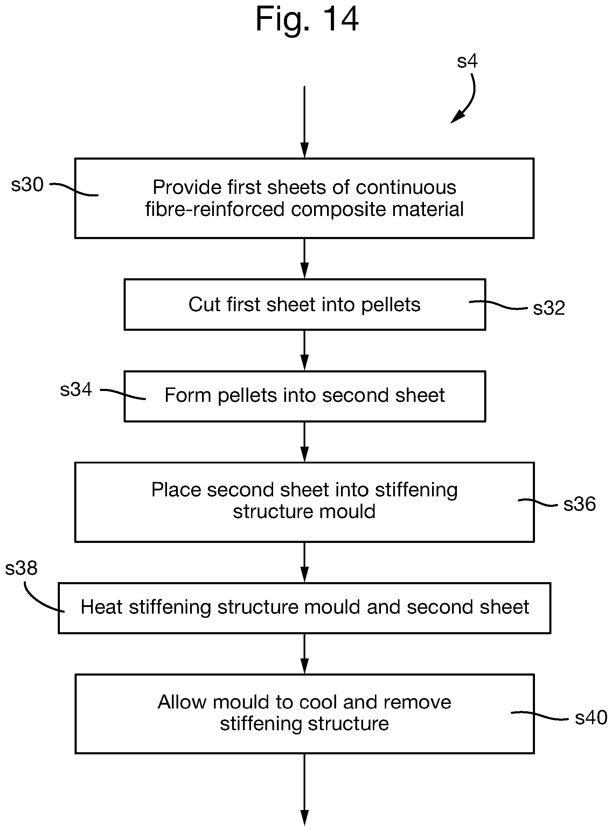

The process of producing the stiffening structure 202 is described in more detail later below with reference to Figure 14.

At step s6, the first members 106 are produced.

In this embodiment, the first members 106 are produced using an Additive Manufacturing (AM) process, which may, for example, comprise constructing the first members 106 in layers from a powdered alloy, such as a titanium alloy. Examples of AM process that may be implemented include, but are not limited to, binder jetting, directed energy deposition, material extrusion, material jetting, powder bed fusion, sheet lamination, and vat photopolymerization.

The protrusions 802 may be formed on some or all of the bond surfaces 800 of the first members 106 by any appropriate process, for example, as part of the AM process, or by a subsequent knurling process. Preferably, the protrusions are formed by an AM process. More preferably, the first members 106 and protrusions 802 are made by the same AM process. In other words, no secondary process is required to produce the protrusions 802 on the bond surfaces 800 of the first members 106. This advantageously means that the method for fabricating the structural assembly is quicker and simpler (i.e. less processing steps) when compared to a method that utilises secondary processing to produce the knurling/protrusions 802 on the bond surfaces 800 ((for example cold/hot stamping/rolling of the first members 106 with an additional surface treatment of chemical etching, mechanical machining or electro-erosion machining to produce the knurling effect).

Furthermore, AM is particularly advantageous for producing the protrusions 802, bond surfaces 800 and first members 106 when the first members 106 (and thus bond surfaces 800) are of complex shape. The use of AM allows the protrusions 800 to be made on any surface geometry or shape of the first members 106 with ease. The AM process is more adaptable (e.g. by way of changing the CAD design model) when compared to secondary treatments such as electro-erosion and chemical etching.

Furthermore, the use of AM to produce the protrusions 800 results in the protrusions having additional surface roughness which provides an additional keying mechanism for the polymer matrix 904 (in other words, the additional surface roughness of the protrusions 800 produced by an AM process increases the surface area available for bonding compared to when the protrusions 800 are not formed by an AM process (for example, if they were made by cold/hot stamping with an additional surface treatment of chemical etching). As such, the use of AM to produce the protrusions 800 results in advantageous additional bond strength.

The surface roughness of the protrusions can be varied by adjusting the AM machine parameters and/or CAD model as appropriate.

At step s8, the first members 106 are plasma treated. In this embodiment, at least the bond surfaces 800 of the first members 106 (i.e. the interior surfaces of the top and side walls 210, 212) undergo plasma treatment to prime the bond surfaces 800 for better acceptance of, and bonding to, the stiffening structure 202. However, in other embodiments, such plasma treatment may be omitted.

At step s10, the first members 106 are placed into a first door assembly tool.

At step s12, a bond compound is applied to the bond surfaces 800 of the first members 106. In this embodiment, the bond compound is a powdered polymer. Preferably, the bond compound is a thermoplastic polymer, and more preferably, the same polymer as that comprised in the door panel 200 and the stiffening structure 202, which may be a thermoplastic polymer such as a PAEK.

In this embodiment, the thickness of the layer of bond compound is less than the lengths of the protrusions, for example less than about 0.5mm.

At step s14, the stiffening structure 202 is placed into the first door assembly tool.

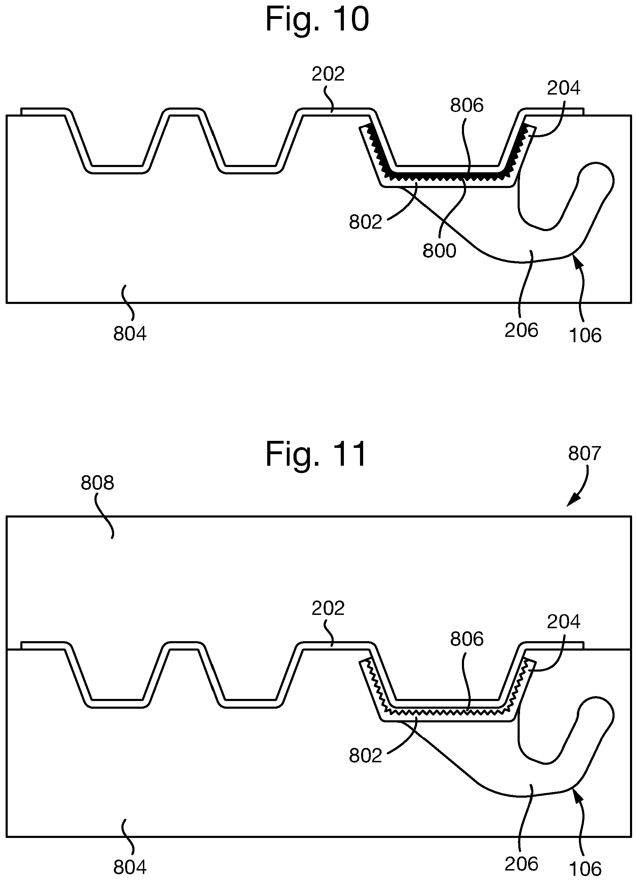

Figure 10 is a schematic illustration (not to scale) showing the first door assembly tool 804 with the first members 106 and stiffening structure 202 located therein.

In this embodiment, the first members 106 and the stiffening structure 202 are placed in appropriately shaped recesses in the first door assembly tool 804, thereby to hold the first members 106 and the stiffening structure 202 in fixed relative positions. In particular, the stiffening structure 202 is positioned such that a H-shaped portion of the stiffening structure 202 lies in the H-shaped volume 214 defined by the walls of the 212, 214 of the base portion 208, and such that it contacts with all of the bond surfaces 800, and the bond compound 806 applied thereto. The bond compound 806 is sandwiched between the bond surfaces 800 and the stiffening structure 202. Since the size and shape of the volume 214 is substantially the same as the portion of the stiffening structure 202 that is located inside the volume 214, the stiffening structure 202 fits snuggly in the volume 214, and tends to press against the protrusions 802. Advantageously, the tapered side walls 202b of the stiffening structure 202, and the tapered side walls 212 of the base portion 204 facilitate pressing of the stiffening structure into the base portion 204 such that it occupies the volume 214.

Advantageously, the protrusions 802 having relatively short lengths (i.e. the protrusions 802 being less than or equal to about 2mm long, or more preferably less than or equal to about 1mm long) tends to provide that the stiffening structure 202 is not impeded from being press fitted in to the volume 214. Also, the likelihood of protrusions 802 breaking, i.e. snapping off, tends to be reduced compared to if longer protrusions or pins were present on the bond surfaces.

At step s16, a second door assembly tool is pressed onto the stiffening structure (i.e. onto the upper surface of the assembly shown in Figure 10), and the resulting assembly (which is hereinafter referred to as the "first assembly") is heated.

Figure 11 is a schematic illustration (not to scale) showing the first assembly 807, i.e. the second door assembly tool 808 pressed over the first door assembly tool 804 and the items located therein.

In this embodiment, a tool surface of the second door assembly tool 808 has the same shape as the desired shape of the interior surface of the stiffening structure 202. The first door assembly tool 804 and the second door assembly tool 808 are pressed together, thereby forcing the stiffening structure 202 and the first members 106 against each other.

In this embodiment, the first assembly 807 is heated, (by way of the press tooling), for example, to a temperature that is between the glass transition temperature and the melting point of the thermoplastic polymer that forms the bond compound 806 and the polymer matrix of the stiffening structure 202. For example, the first assembly 807 may be heated to a temperature that is greater than about 100°C and less than about 400°C, greater than about 120°C and less than about 375°C or greater than about 140°C and less than about 350°C e.g. about 100 °C, 150 °C, 200°C, 250°C, 260°C, 270°C, 280°C, 290°C, 300°C, 305°C, 310°C, 320°C, 325°C, 330°C, 335°C, 340°C, 350°C, 360°C or 370 °C. For example, in the specific case where the thermoplastic polymer is PEEK, the first assembly 807 may be heated to a temperature that is greater than about 143°C and less about 343°C, e.g. about 250°C, 260°C, 270°C, 280°C, 290°C, 300°C, 305°C, 310°C, 320°C, 325°C, 330°C, 335°C, or about 340°C. Preferably, in the case where the thermoplastic polymer is PEEK (for example basic grade PEEK), the first assembly 807 is heated to about 280°C-320°C or 290°C-310°C, preferably 300°C-310°C, most preferably to about 304°C-306°C, for example to about 305°C. However, some high temperature (high grade) PEEK materials may be heated to a higher temperature.

The heated thermoplastic polymer is in its plastic state, i.e. a state in which the thermoplastic polymer is plastic, e.g. is capable of being plastically deformed, shaped or moulded.

The heating of the thermoplastic polymer causes the thermoplastic polymer to become more pliable, mouldable, or softer than it was before it was heated.

The combination of heat and pressure applied to the stiffening structure 202, bond compound 806, and first members 106 tends to cause the thermoplastic polymer of the stiffening structure 202 and the bond compound 806 to fuse (i.e. weld) together. For example, the thermoplastic polymer of the stiffening structure 202 and the bond compound may flow into each other and mix, at least to some extent. Also, this combination of heat and pressure tends to cause the thermoplastic polymer to mould to the shape of, and/or to flow between, the protrusions 802 on the bond surfaces 800.

The thermoplastic polymer of the stiffening structure 202 is capable of being moulded or plastically deformed (or of flowing plastically) at a temperature much lower than the melting point of the titanium alloy first member 106. Thus, the first member 106 tends not to be deformed by the heating process performed at step s16.

After heating the first assembly 807 for a sufficient time to cause the thermoplastic polymer of the stiffening structure 202 and the bond compound 806 to fuse together (which may be any appropriate time, for example, an about 2-3 hour ramp up, an about 2 hour dwell, and an about 2 hour drop), the first assembly 807 may be allowed to cool, thereby causing the thermoplastic polymer to harden or solidify. This advantageously tends to provide a strong, fastenerless attachment between the stiffening structure 202 and first members 106.

Figure 12 is a schematic illustration (not to scale) showing further details of the fastenerless join structure 900 between the stiffening structure 202 and the first members 106 produced at step s16.

The stiffening structure 202 comprises relatively short carbon fibres 902 embedded in the thermoplastic polymer matrix 904.

In this embodiment, the polymer matrix 904 is formed against the entire bond surface 800. The polymer matrix 904 contacts the surfaces of the protrusions 802 and also occupies spaces between the protrusions 802.

In this embodiment, the thickness of the bond compound applied at step s12 is less than the lengths of the protrusions, for example less than about 0.5mm. Thus, the protrusions 802 extend into the region of the polymer matrix 904 of the stiffening structure 202 in which the short fibres 902 are present. Advantageously, the short lengths of the fibres (e.g. less than or equal to about 50mm) tends to allow the fibres 902 to move or flow around the protrusions 802 when the first assembly is heated (at step s16). Thus, certain short fibres 902 tend to be positioned within the polymer matric 904, and are positioned around/in-between the protrusions 802. This advantageously tends to provide a strong bond between the stiffening structure 202 and first members 106.

Advantageously, the relatively short lengths of the protrusions 802 tend to provide that the cross sectional thickness of the stiffening structure 202 at the locations of the protrusions 802 is not significantly reduced. Use of longer protrusions or pins on the bonding surfaces 800 would tend to reduce the thickness of the stiffening structure 202 at the locations of those longer protrusions or pins, thereby introducing points of structural weakness into the stiffening structure 202. This tends to be avoided in the above described fastenerless join structure 900.

Returning to the description of Figure 9, at step s18, the second door assembly tool 808 is removed from the first assembly 807, bond compound 806 is then applied to the surfaces of the stiffening structure 202 that are to be fixed to the door panel 200 (i.e. the flange 202c), and the door panel 200 (produced at step s2) is placed into the first door assembly tool 804, onto the stiffening structure 202.

At step s20, a third door assembly tool is pressed onto the door panel 200, and the resulting assembly (which is hereinafter referred to as the "second assembly") is heated.

Figure 13 is a schematic illustration (not to scale) showing the second assembly 810.

The bond compound 806 is sandwiched between the door panel 200 and the surfaces of the stiffening structure 202 that are to be fixed to the door panel 200.

In this embodiment, a tool surface of the third door assembly tool 812 has the same shape as the desired shape of the outer surface of the door panel 200, i.e. the OML of the aircraft 100. The first door assembly tool 804 and the third door assembly tool 812 are pressed together, thereby forcing the stiffening structure 202 and the door panel 200 against each other.

In this embodiment, the second assembly 810 is heated to a temperature that is between the glass transition temperature and the melting point of the thermoplastic polymer that forms the bond compound 806 and the polymer matrix of the stiffening structure 202 and door panel 200. For example, the second assembly 810 may be heated to a temperature that is greater than about 100°C and less than about 400°C, greater than about 120°C and less than about 375°C or greater than about 140°C and less than about 350°C e.g. about 100 °C, 150 °C, 200°C, 250°C, 260°C, 270°C, 280°C, 290°C, 300°C, 305°C, 310°C, 320°C, 325°C, 330°C, 335°C, 340°C, 350°C, 360°C or 370 °C. Preferably, the second assembly 810 is heated to about 280°C-320°C or 290°C-310°C, preferably 300°C-310°C, most preferably to about 304°C-306°C, for example to about 305°C.

The combination of heat and pressure applied to the stiffening structure 202, bond compound 806, and door panel 200 tends to cause the thermoplastic polymer of the stiffening structure 202, bond compound 806, and door panel 200 to fuse (i.e. weld) together.

After heating the second assembly 810 for sufficient time to cause the thermoplastic polymer of the stiffening structure 202, bond compound 806, and door panel 200 to fuse together (which may be any appropriate time, for example, an about 2-3 hour ramp up, an about 2 hour dwell, and an about 2 hour drop), the second assembly 810 may be allowed to cool, thereby causing the thermoplastic polymer to solidify. This advantageously tends to provide a strong bond between the stiffening structure 202 and door panel 200.

At step s22, the fixed together door panel 200, stiffening structure 202, and first members 106 (i.e. the assembled together door assembly) are removed from the door assembly tools 804, 812.

Advantageously, the tapered side walls 202b of the stiffening structure 202 tend to facilitate removal of the door assembly from the door assembly tool 804.

Thus, an embodiment of a method of fabricating the aircraft door 102 is provided.

Returning now to the description of step s4, Figure 14 is a process flow chart showing certain steps of a process of producing the stiffening structure 202 performed at step s4.

At step s30, a continuous fibre-reinforced thermoplastic composite material is provided, preferably in the form of one or more sheets or panels which are hereinafter referred to as "first sheets". The continuous fibre-reinforced thermoplastic composite material is a composite material that comprises (e.g. high-performance or aerospace grade) continuous carbon fibres that are embedded in a matrix of thermoplastics, such as a PAEK (e.g. PEEK). As noted earlier above, the terminology "continuous fibres" is used herein to refer to long fibres of length greater than 50mm.

The continuous fibre-reinforced thermoplastic composite material may be a layered or laminated structure. The continuous fibres may be arranged in any appropriate form including, but not limited to, unidirectional arrangement, plain weave, harness satin weave, braided, and stitched.

At step s32, the one or more first sheets are cut into relatively small pieces or "pellets". Thus, the first sheets may be considered to be "pelletised". Preferably, the one or more first sheets are cut in multiple different directions, more preferably in two directions which extend essentially perpendicular to each other. Preferably, the pellets into which the one or more first sheets are cut have a longest dimension of less than or equal to about 25mm, e.g. in the range of about 0-5mm, in the range of about 5-10mm, in the range of about 10-15mm, in the range of about 15-20mm, or in the range of about 20-25mm. The pellets into which the one or more first sheets are cut tend to comprise relatively short carbon fibres, or discontinuous carbon fibres. The terminology "discontinuous fibres" and "short fibres" is used herein to refer to short fibres having a length of less than or equal to about 50mm.

At step s34, the pellets produced at step s32 are moulded into a substantially flat sheet, thereby forming a sheet of short fibre-reinforced thermoplastic composite material, which is hereinafter referred to as a "second sheet".

The second sheets may be formed by any appropriate process, including for example one of placing the pellets into a mould, heating the pellets (e.g. to a temperature above the melting point of the thermoplastic polymer, or to a temperature between the glass transition temperature and the melting point of the thermoplastic polymer) to cause the pellets to agglomerate and form to the shape of the mould cavity, and thereafter allowing the material to cool and harden before removing the second sheet from the mould.

At step s36, the substantially flat second sheet is placed into a stiffening structure mould, i.e. a mould having a mould cavity substantially the same shape as the desired shaped for the stiffening structure 202.

At step s38, the stiffening structure mould and second sheet therein is heated, and the stiffening structure mould applies pressure to the second sheet to form the second sheet into the desired shape for the stiffening structure 202.

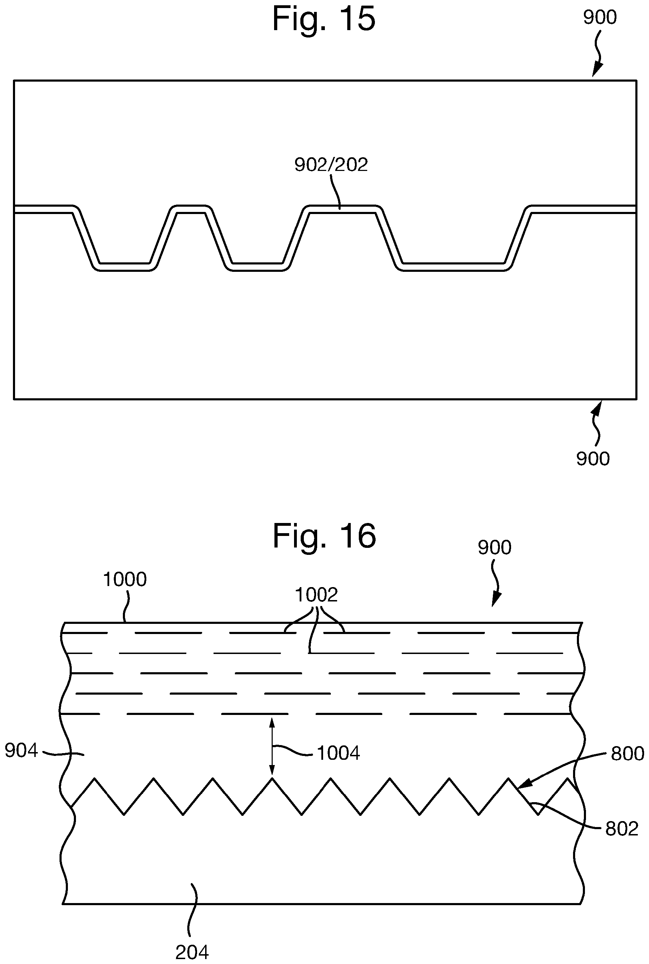

Figure 15 is a schematic illustration (not to scale) showing the stiffening structure mould 900 and second sheet 902 therein.

In this embodiment, to press form the second sheet into the desired shape thereby forming the stiffening structure 202, the stiffening structure mould 900 and second sheet 902 therein is heated to a temperature that is between the glass transition temperature and the melting point of the thermoplastic polymer comprised in the second sheet 902. Heating to such a temperature whilst forming reduces the level of thinning and stress applied in the resultant part compared to, for example, the method of cold stamping. For example, the stiffening structure mould 900 and second sheet 902 therein may be heated to a temperature that is greater than about 100°C and less than about 400°C, greater than about 120°C and less than about 375°C or greater than about 140°C and less than about 350°C e.g. about 100 °C, 150 °C, 200°C, 250°C, 260°C, 270°C, 280°C, 290°C, 300°C, 305°C, 310°C, 320°C, 325°C, 330°C, 335°C, 340°C, 350°C, 360°C or 370 °C. Preferably, the stiffening structure mould 900 and second sheet 902 therein are heated to about 280°C-320°C or 290°C-310°C, preferably 300°C-310°C, most preferably to about 304°C-306°C, for example to about 305°C.

The combination of heat and pressure applied to the second sheet 902 tends to form the second sheet 902 into the desired shape of the stiffening structure 202. Advantageously, the relatively short carbon fibres in the second sheet 902 increase the flowability and thus tend to facilitate the second sheet 902 being press formed into the relatively complex desired shape for the stiffening structure 202, compared to if the second sheet comprised longer (e.g. continuous) fibres. Furthermore, use of the short fibre reinforced composite material of the second sheet 902 tends to facilitate production of the stiffening structure 202 as a single, monolithic piece, thereby reducing assembly time, assembly errors, costs, and increasing part accuracy. In other words, a network of corrugated stiffeners in one monolithic stiffening structure is produced in one moulding process. Thus the network of stiffeners in the form of one monolithic piece can be attached to the door panel in one operation instead of individual stiffeners having to be attached in multiple operations.

In some embodiments, the second sheet is heated away from the stiffening structure mould, and subsequently brought to the stiffening structure mould where it is press formed into the desired shape for the stiffening structure.

At step s40, the stiffening structure 202 is allowed to cool and harden in the stiffening structure mould 900, and thereafter removed from the stiffening structure mould 900.

Advantageously, the tapered side walls 202b of the stiffening structure 202 tend to facilitate removal of the stiffening structure 202 from the stiffening structure mould 900.

Thus, a process of producing a stiffening structure 202 is provided.

Advantageously, the press forming of the stiffening structure 202 provides a low cost method of manufacture, particularly when compared to the more complex tooling methods of injection moulding and co-stamping. This is particularly beneficial in low volume production.

Further, the press forming method facilitates the formation of the hollow sections of the stiffening structure 202 (the hollows formed from the corrugation of the stiffeners when attached to the door panel) and the complex and curved shape of the corrugation of the stiffeners. The utilisation of hollow sections in the stiffening structure 202 achieves a given level of structural performance for a lower mass, which is particularly beneficial for hinge assemblies in aircraft structures.

Further, the press forming of the stiffening structure 202 results in advantageous volume fraction (i.e. more structural material for a given volume) particularly when compared to alternative methods such as injection moulding.

Press forming also facilitates the use of anisotropic short fibre-reinforced CFC material (e.g. different fibre lengths). In other words, press forming can accommodate a wider range of fibre lengths when compared to, for example, injection processes which tend to be limited to shorter fibres to achieve flowability. The aircraft door structures and assemblies of the present invention can be 'into the wind' structures and as such may experience high loads (for example acoustic loads), particularly when open in-flight. As such, the structures have to be high performance for a given mass. This is particularly achieved by the combination of utilising short carbon fibres with a press forming process.

Advantageously, the short fibre-reinforced CFC material from which the stiffening structure is made tends to be recyclable. This tends to facilitate repair and maintenance of the stiffening structure and allows for material recovery. Furthermore, the short fibre-reinforced CFC material from which the stiffening structure is made may be produced, as described above, from continuousreinforced CFC material. Thus, costs tend to be reduced.

When the above described door assembly is in use on the aircraft 100, the fastenerless join structure tends to experience shear stresses, for example shear stresses that act to attempt to cause the sidewalls 212 of the base portion 204 and the side walls 202b of the stiffening structure 202 (which substantially parallel internal surfaces of the fastenerless join structure and are bonded together) to slide past each other. Advantageously, the above described fastenerless join structure tends to have particularly high shear strength to this type of shear force. This high shear strength may result at least in part from the protrusions 802 located on the bond surfaces of the sidewalls 212 of the base portion 204, and the thermoplastic polymer formed against those protrusions 802. Also, this high shear strength may result at least in part from the large surface area of the surfaces that experience shear forces in use (i.e. the relatively large surface area of the bond surfaces 800 of the sidewalls 212 of the base portion 204, and the surface area of the stiffening structure 212 bonded to those bond surfaces 800). The high shear strength may result at least in part from the protrusions 802 being made from an AM process and the resulting rough texture of the protrusions 802 providing increased bonding surfaces.

Advantageously, the H-shape of the base portion 204 tends to provide that the base portion 204 is compact (i.e. its size is limited in multiple different dimensions), while still providing the large surface area of the surfaces that experience shear forces in use. This compact size of the base portion tends to facilitate production of the first members, for example by AM machines having limited build volumes.

Furthermore, the H-shape of the base portion 204 tends to provide walls that are oriented in multiple different directions. This advantageously tends to provide that the fastenerless join structure is capable of withstanding twisting moments. In use, the top surfaces 210 of the base portions 204 tend to transfer loads to the side walls 212 of the base portions 204.

Advantageously, the above described fastenerless join structure tends to provide that no, or a reduced number of mechanical fasteners are used in the door assembly. This tends to reduce the overall weight of the door assembly, and also may speed up assembly time.

Advantageously, the above described fastenerless join structure tends to facilitate repair and maintenance of the door assembly. For example, in the event that a hinge assembly requires repair or replacement, the relevant first member may relatively easily be removed from the aircraft door by melting the thermoplastic polymer bonded to that first member. The first member may then be repaired and replaced.

Advantageously, damage tolerance tends to be improved by using thermoplastics, which tend to be less brittle than thermosetting materials.

It should be noted that certain of the process steps depicted in the flowchart of Figures 9 and 14 and described above may be omitted or such process steps may be performed in differing order to that presented above and shown in Figures 9 and 14. Furthermore, although all the process steps have, for convenience and ease of understanding, been depicted as discrete temporallysequential steps, nevertheless some of the process steps may in fact be performed simultaneously or at least overlapping to some extent temporally.

In the above embodiments, the fastenerless join structure used to attach the hinge to the stiffening structure does not include any mechanical fasteners (e.g. bolts, screws, nails, clamps, and rivets). In examples not falling within the scope of the appended claims, it will be appreciated by those skilled in the art that mechanical fasteners, including but not limited to bolts, screws, nails, clamps, and rivets, may be used in addition to the fastenerless join structure, for example to provide additional join strength. For example, mechanical fasteners (e.g. rivets or so-called "chicken-rivets") may be used to attach the hinge to the stiffening structure in addition to the above described fastenerless join structure, for example to reduce the likelihood of peel.

In the above embodiments, the fastenerless join structure is implemented as part of an aircraft hinge assembly for an aircraft door. However, in other embodiments, the fastenerless join structure is implemented as part of a different system, e.g. a different join between two component parts on an aircraft or a different type of vehicle, such as a land or sea vehicle, or other type of entity. The aircraft may be a manned aircraft or an unmanned aircraft.

In the above embodiments, the aircraft door assembly comprises three hinge assemblies. However, in other embodiments, the aircraft door assembly comprises a different number of hinge assemblies, e.g. one, two, or more than three hinge assemblies.

In the above embodiments, the fastenerless join structure fixes together a hinge member made of a titanium alloy to an aircraft door component made of a short-fibre thermoplastic CFC. However, in other embodiments, the hinge member or a different entity is made of a different material other than the above discussed titanium alloy, for example a different type of titanium alloy (such as any of grades 1-38 titanium alloys), aluminium alloys (such as 7068, 7075, 6061, 6063, or 7050 aluminium), steel, a thermosetting polymer (such as polyester resin, vulcanised rubber, epoxy resin, silicone resins, or a combination thereof) or composite material (such as a carbon, glass, or cellulose fibre reinforced composite material, which may be either a thermoplastic or thermosetting composite material). Also for example, the aircraft door component or a different entity is made of a different material other than a short fibre thermoplastic CFC, for example a continuous fibre-reinforced composite material (which may be, e.g., either thermosetting or thermoplastic), a thermosetting short or long fibre-reinforced composite material (which may have, as a polymer matrix, polyester resin, vulcanised rubber, epoxy resin, silicone resins, or a combination thereof), or a glass-fibre or cellulose-fibre reinforced composite material.

Examples of suitable thermoplastics that may be used in the context of the present invention include, but are not limited to, acrylic, acrylonitrile butadiene styrene (ABS), nylon, polylactide (PLA) polyetherketone (PEK), polyetheretherketone (PEEK), polyetherketoneketone (PEKK), polyetheretherketoneketone (PEEKK), polyetherketoneetherketoneketone (PEKEKK), polybenzimidazole (PBI), polycarbonate (PC), polyether sulfone (PES), polyetherimide (PEI), polyethylene (PE), polyphenylene oxide (PPO), perfluoroalkoxyalkane (PFA), ethylene tetrafluroethylene (ETFE), polyphenylene sulphide (PPS), polypropylene (PP), polystyrene, polyvinyl chloride (PVC), and polymer polytetrafluoroethylene (PTFE), or any combination thereof.

In the above embodiments, the stiffening structure comprises a plurality of connected longitudinal and transverse stiffening elements arranged to form a frame. However, in other embodiments the stiffening structure has a different shape.

In the above embodiments, the stiffening structure is produced using a process described in more detail above with reference to Figure 13. However, in other embodiments the stiffening structure is produced using a different appropriate process, e.g. an injection moulding comprising melting the pellets and injecting the melted pellets into a mould.

In the above embodiments, the first member is produced using an AM process. However, in other embodiments the first member is produced using a different process, e.g. a casting or a machining process.

In the above embodiments, when viewed from above, the base portions 204 of the first members 106 are H-shaped. However, in other embodiments, when viewed from above, the base portion of one or more of the base portions is a different shape, for example, a C-shape, a S-shape, a J-shape, a L-shape, a T-shape, a U-shape, a F-shape, a Y-shape, a X-shape etc. Preferably, the shape of the base portion is optimised so that the surface areas of the bond surface that experience shear forces in use are optimised. The stiffening structure 202 may have a shape that allows it to fit onto the base portions. The base portion 204 could be considered matched in shape to the stiffening structure 202. In other words, the hinge sits on top of the stiffening structure and utilises the outer profile of the stiffeners to enable the door loads to transfer by shear into the hinge. This arrangement minimizes tension loading on the bonding surface and means, for example, that no structural fasteners or anti-peel fasteners are required.

Preferably the base portion 204 comprises walls orientated in multiple directions. Preferably the base portion 204 is shaped so that it provides maximum footprint area for the bond surface. This advantageously aids adherence and thus performance.

In the above embodiments, the base portion of the first member, and the stiffening structure, have tapered side walls. However, in other embodiments, the side walls are shaped differently. For example, in some embodiments the taper may be opposite to that described above. Also, in some embodiments, the side walls do not taper.

In the above embodiments, the interior surface of the walls comprises a plurality of protrusions 802 which extend into the volume 214. However, in other embodiments, protrusions are omitted from some or all of the interior surfaces of the walls. For example, in some embodiments, protrusions are only located on some or all of the interior surfaces of the side walls, and the interior surface of the top wall does not include such protrusions. In some embodiments, use of an AM process tends to provide that the bond surfaces are sufficiently rough or textured to provide an adequate bond strength.

In the above embodiments, the protrusions 802 are square-based pyramids in shape. However, in other embodiments, one or more of the protrusions is a different shaped -based pyramid, for example, a circle-based pyramid (cone), a rectangle-based pyramid or a triangle-based pyramid.

In the above embodiments, the protrusions 802 are contiguous over some or all of the interior surface. However, in other embodiments, some or all of the protrusions are spaced apart from other protrusions. For example, in some embodiments, the protrusions comprise spaced apart pins that extend from the inner surface of a wall into the volume.

In the above embodiments, the protrusions 802 have a base width that is less than or equal to about 1mm. However, in other embodiments, the base width of one or more of the protrusions is a different size, for example greater than about 1mm, for example 1-1.5mm or 1.5-2mm.

In the above embodiments, in the fastenerless join structure (as shown in Figure 12, for example) the protrusions 802 extend into the region of the polymer matrix 904 in which the short fibres 902 are present. The short lengths of the fibres tend to allow the fibres to move or flow around the protrusions when the first assembly is heated. However, in other embodiments, in the fastenerless join structure, the protrusions remain spaced apart from a significant proportion, or all the carbon fibres in the polymer matrix, as will now be described.

The size, shape, direction and location of the protrusions 802 are chosen to best suit the loading actions of the first member 106 and the structural assembly in general. For example, it may be preferable to have larger protrusions 802 around the periphery of the bond surface and smaller protrusions 802 in the centre of the bond surface. Accordingly, in the method and structural assembly of the present invention, the protrusions 802 may be located from (extend from) the periphery to the centre of the bond surface, with the protrusions nearest the periphery being larger in at least one dimension (e.g. length and/or width) than those located nearer the centre of the bond surface.

The direction/alignment of the protrusions may also be varied. For example, the protrusions may be at 90 degrees with respect to the bond surface, at an obtuse angle with respect to the bond surface or at an acute angle with respect to the bond surface. When at an acute angle to the bond surface the protrusions act to further grip the composite structure, acting very much like sharks teeth.

The use of an AM process to produce the protrusions 802 (preferably pyramid shaped protrusions) facilitates the alteration of the size, direction/alignment, shape, number and/or location of the protrusions, for example as the design matures or the required conditions of use of the structural assembly change. This is because to alter such parameters requires the alteration of a CAD model and does not require additional tooling/moulding to be made, as would be the case in, for example, hot/cold stamping, rolling or injection moulding. As such the use of an AM method is advantageously more cost and time effective.

Further, using an AM process allows multiple variations in the size, shape, direction and/or location of the protrusions. Such design control is not readily achievable with alternative processes such as stamping, rolling or machining the protrusions.

The use of an AM process also produces tight tolerances in the size and shape of the protrusions (in other words, there is very little variation in the dimensions and shape of each protrusion).

The use of an AM process to produce the protrusions may also result in reduced residual stresses, degradation and/or damage in the first member and protrusions when compared to processes such as cold/hot stamping/rolling.

Figure 16 is a schematic illustration (not to scale) showing a fastener join structure 900 between a first member 106 and an article 1000 made of a continuous fibre-reinforced composite material.

The fastenerless join structure 900 shown in Figure 16 may be produced using the method described above with reference to Figure 9, e.g. steps s8-s22 with the door stiffening structure 202 replaced by the article 1000 made of the continuous fibre-reinforced composite material. Also, optionally, at step s12 the thickness of the bond compound applied to the bond surface 800 may be greater than the lengths of the protrusions 802. Thus, advantageously, the continuous carbon fibres 1002 in the article 100 tend to be spaced apart from most or all of the protrusions 802, as indicated in Figure 16 by a double headed arrow and the reference numeral 1004. This spacing 1004 between the carbon fibres 1002 and the protrusions 802 tends to provide that there is little or no fibre deformation or disturbance of the continuous fibres 1002 caused by the protrusions 802. Deformation or disturbance of the long fibres 1002 may result in reduced strength and/or stiffness of the long carbon fibre-reinforced composite material article 1000. This reduced strength and/or stiffness tends to be avoided in the above described fastenerless join structure 900. The protrusions 802 not extending into the polymer matrix 904 so as to deform a significant number of the fibres 1002 tends to result at least in part from the relatively short lengths of the protrusions 802 (i.e. the protrusions 802 being less than or equal to about 2mm long and more preferably less than or equal to about 1mm long). The protrusions 802 not extending into the polymer matrix 904 so as to deform the fibres 902 may also result, at least in part, from use of the bond compound 806 applied to the bond surfaces 800, which provides that additional thermoplastic polymer is introduced between the stiffening structure and the bond surfaces so as to provide the spacing 906.

## Claims

1. A door assembly for a vehicle, the door assembly comprising:
a door (200);
a stiffening structure (202) fixed to a surface of the door, the stiffening structure comprising a first wall spaced apart from and substantially parallel to the surface of the door, and first side walls extending between the first wall and the surface of the door; and
a hinge member (106) comprising:
a base portion (204); and
a hinge arm (206) extending from the base portion; wherein
the base portion (204) comprises a top wall (210) and second side walls (212) extending from the top wall, the top wall and second side walls defining a volume;
at least a part of the stiffening structure (202) is located in the volume;
the hinge member (106) sits on top of the stiffening structure; and
outer surfaces of the first side walls are bonded to internal surfaces of the second side walls via bond surfaces, without the use of mechanical fasteners; wherein
the bond surface of the internal surface of a second side wall comprises a plurality of protrusions that extend into the stiffening structure, wherein each of the plurality of protrusions (802) have a length of less than or equal to 2mm.

2. A door assembly according to claim 1, wherein the at least a part of the stiffening structure (202) is substantially the same size and shape as the volume in which it is located.

3. A door assembly according to claim 1 or 2, wherein an outer surface of the first walls is bonded to an internal surface of the top wall (210).

4. A door assembly according to any of claims 1 or 3, wherein the first side walls of the stiffening structure taper outwards from the first wall to the surface of the door.

5. A door assembly according to any of claims 1 to 4, wherein the second side walls taper outwards from the top wall to their distal edges opposite to the top wall (210).

6. A door assembly according to any of claims 1 to 5, wherein:
the stiffening structure (202) comprises a plurality of connected stiffening elements oriented in multiple different directions, and
the at least a part of the stiffening structure (202) that is located in the volume comprises a plurality of the stiffening elements oriented in multiple different directions.

7. A door assembly according to any of claims 1 to 6, wherein the top wall (210) has a shape selected from the group of shapes consisting of: a H-shape, a I-shape a C-shape, a S-shape, a J-shape, a L-shape, a T-shape, a U-shape, a F-shape, a Y-shape and a X-shape.

8. A door assembly according to any of claims 1 to 7, wherein the stiffening structure (202) comprises a thermoplastic fibre-reinforced composite material.

9. A door assembly according to any of claims 1 to 8, wherein the stiffening structure (202) comprises a short fibre-reinforced composite material comprising short fibres embedded in a polymer matrix, the short fibres having lengths of less than or equal to 50mm.

10. A door assembly according to any preceding claim, wherein each of the plurality of protrusions (802) has a length of less than or equal to 1mm.

11. A door assembly according to any of claims 1 to 10, wherein the hinge member is a metal or alloy hinge member produced using an Additive Manufacturing process.

12. A door assembly according to any of claims 1 to 11, wherein the vehicle is an aircraft (100) and the door is an aircraft door (102).

13. A vehicle comprising a door assembly according to any of claims 1 to 12.

14. A method for fabricating a door assembly for a vehicle, the method comprising:
providing a stiffening structure (202), the stiffening structure comprising a first wall and first side walls extending from the first wall;
providing a hinge member (106) comprising a base portion (204) and a hinge arm (206) extending from the base portion, the base portion comprising a top wall (210) and second side walls extending from the top wall, the top wall and second side walls defining a volume;
sitting the hinge member on top of the stiffening structure (202) and locating at least a part of the stiffening structure in the volume;
bonding outer surfaces of the first side walls to internal surfaces of the second side walls via bond surfaces, without the use of mechanical fasteners ; and
fixing the stiffening structure (202) to a surface of the door such that the first wall is spaced apart from and substantially parallel to the surface of the door, and first side walls extend between the first wall and the surface of the door; wherein
the bond surface of the internal surface of a second side wall comprises a plurality of protrusions (802) that extend into the stiffening structure, wherein the protrusions are less than or equal to 2mm long.

## Patentansprüche

1. Türanordnung für ein Fahrzeug, die Türanordnung umfassend:
eine Tür (200);
eine Versteifungsstruktur (202), die an einer Oberfläche der Tür fixiert ist, die Versteifungsstruktur umfassend eine erste Wand, die von der Oberfläche der Tür beabstandet und im Wesentlichen parallel zu dieser ist, und erste Seitenwände, die sich zwischen der ersten Wand und der Oberfläche der Tür erstrecken; und
ein Scharnierelement (106), umfassend:
einen Basisabschnitt (204); und
einen Scharnierarm (206), der sich von dem Basisabschnitt aus erstreckt; wobei
der Basisabschnitt (204) eine obere Wand (210) und zweite Seitenwände (212) umfasst, die sich von der oberen Wand erstrecken, wobei die obere Wand und die zweiten Seitenwände ein Volumen definieren;
sich mindestens ein Teil der Versteifungsstruktur (202) in dem Volumen befindet;
das Scharnierelement (106) oben auf der Versteifungsstruktur sitzt; und
Außenoberflächen der ersten Seitenwände über Verbindungsoberflächen mit Innenoberflächen der zweiten Seitenwände verbunden sind, ohne dass mechanische Befestigungselemente verwendet werden; wobei die Verbindungsoberfläche der Innenoberfläche einer zweiten Seitenwand eine Vielzahl von Vorsprüngen umfasst, die sich in die Versteifungsstruktur erstrecken, wobei jeder der Vielzahl von Vorsprüngen (802) eine Länge von weniger als oder gleich 2 mm aufweist.

2. Türanordnung nach Anspruch 1, wobei mindestens ein Teil der Versteifungsstruktur (202) im Wesentlichen die gleiche Größe und Form wie das Volumen aufweist, in dem er sich befindet.

3. Türanordnung nach Anspruch 1 oder 2, wobei eine Außenoberfläche der ersten Wände mit einer Innenoberfläche der oberen Wand (210) verbunden ist.

4. Türanordnung nach einem der Ansprüche 1 oder 3, wobei die ersten Seitenwände der Versteifungsstruktur von der ersten Wand nach außen zu der Oberfläche der Tür hin verjüngt sind.

5. Türanordnung nach einem der Ansprüche 1 bis 4, wobei die zweiten Seitenwände von der oberen Wand nach außen zu ihren distalen Kanten hin verjüngt sind, die der oberen Wand (210) gegenüberliegen.

6. Türanordnung nach einem der Ansprüche 1 bis 5, wobei:
die Versteifungsstruktur (202) eine Vielzahl von verknüpften Versteifungselementen umfasst, die in mehrere unterschiedliche Richtungen ausgerichtet sind, und
der mindestens eine Teil der Versteifungsstruktur (202), der sich in dem Volumen befindet, eine Vielzahl der Versteifungselemente umfasst, die in mehrere unterschiedliche Richtungen ausgerichtet sind.

7. Türanordnung nach einem der Ansprüche 1 bis 6, wobei die obere Wand (210) eine Form aufweist, die aus der Gruppe von Formen ausgewählt ist, bestehend aus: einer H-Form, einer I-Form, einer C-Form, einer S-Form, einer J-Form, einer L-Form, einer T-Form, einer U-Form, einer F-Form, einer Y-Form und einer X-Form.

8. Türanordnung nach einem der Ansprüche 1 bis 7, wobei die Versteifungsstruktur (202) ein thermoplastisches faserverstärktes Verbundmaterial umfasst.

9. Türanordnung nach einem der Ansprüche 1 bis 8, wobei die Versteifungsstruktur (202) ein kurzfaserverstärktes Verbundmaterial umfasst, umfassend Kurzfasern, die in eine Polymermatrix eingebettet sind, wobei die Kurzfasern Längen von weniger als oder gleich 50 mm aufweisen.

10. Türanordnung nach einem der vorstehenden Ansprüche, wobei jeder der Vielzahl von Vorsprüngen (802) eine Länge von weniger als oder gleich 1 mm aufweist.

11. Türanordnung nach einem der Ansprüche 1 bis 10, wobei das Scharnierelement ein Scharnierelement aus Metall oder einer Legierung ist, das unter Verwendung eines additiven Herstellungsverfahrens produziert wird.

12. Türanordnung nach einem der Ansprüche 1 bis 11, wobei das Fahrzeug ein Luftfahrzeug (100) ist und die Tür eine Luftfahrzeugtür (102) ist.

13. Fahrzeug, umfassend eine Türanordnung nach einem der Ansprüche 1 bis 12.

14. Verfahren zum Fertigen einer Türanordnung für ein Fahrzeug, das Verfahren umfassend:
Bereitstellen einer Versteifungsstruktur (202), die Versteifungsstruktur umfassend eine erste Wand und erste Seitenwände, die sich von der ersten Wand erstrecken;
Bereitstellen eines Scharnierelements (106), umfassend einen Basisabschnitt (204) und einen Scharnierarm (206), der sich von dem Basisabschnitt erstreckt, der Basisabschnitt umfassend eine obere Wand (210) und zweite Seitenwände, die sich von der oberen Wand erstrecken, wobei die obere Wand und die zweiten Seitenwände ein Volumen definieren;
Platzieren des Scharnierelements auf der Versteifungsstruktur (202) und Anordnen von mindestens einem Teil der Versteifungsstruktur in dem Volumen;
Verbinden der Außenoberflächen der ersten Seitenwände über Verbindungsoberflächen mit den Innenoberflächen der zweiten Seitenwände, ohne dass mechanische Befestigungselemente verwendet werden; und
derartiges Fixieren der Versteifungsstruktur (202) an einer Oberfläche der Tür, dass die erste Wand von der Oberfläche der Tür beabstandet und im Wesentlichen parallel zu dieser ist, und sich erste Seitenwände zwischen der ersten Wand und der Oberfläche der Tür erstrecken; wobei
die Verbindungsoberfläche der Innenoberfläche einer zweiten Seitenwand eine Vielzahl von Vorsprüngen (802) umfasst, die sich in die Versteifungsstruktur erstrecken, wobei die Vorsprünge weniger als oder gleich 2 mm lang sind.

## Revendications

1. Ensemble porte destiné à un véhicule, l'ensemble porte comprenant :
une porte (200) ;
une structure de raidissement (202) fixée à une surface de la porte, la structure de raidissement comprenant une première paroi espacée de la surface de la porte et sensiblement parallèle à celle-ci, et des premières parois latérales s'étendant entre la première paroi et la surface de la porte ; et
un organe charnière (106) comprenant :
une portion base (204) ; et
un bras articulé (206) s'étendant à partir de la portion base ; dans lequel
la portion base (204) comprend une paroi supérieure (210) et des secondes parois latérales (212) s'étendant à partir de la paroi supérieure, la paroi supérieure et les secondes parois latérales définissant un volume ;
au moins une partie de la structure de raidissement (202) est située dans le volume ;
l'organe charnière (106) repose sur le dessus de la structure de raidissement ; et
des surfaces externes des premières parois latérales sont collées à des surfaces internes des secondes parois latérales par l'intermédiaire de surfaces de collage, sans utiliser d'attaches mécaniques ; dans lequel la surface de collage de la surface interne d'une seconde paroi latérale comprend une pluralité de saillies qui s'étendent dans la structure de raidissement, dans lequel chaque saillie de la pluralité de saillies (802) a une longueur inférieure ou égale à 2 mm.

2. Ensemble porte selon la revendication 1, dans lequel au moins une partie de la structure de raidissement (202) est sensiblement de la même taille et de la même forme que le volume dans lequel elle se trouve.

3. Ensemble de porte selon la revendication 1 ou 2, dans lequel une surface externe des premières parois est collée à une surface interne de la paroi supérieure (210).

4. Ensemble porte selon l'une quelconque des revendications 1 ou 3, dans lequel les premières parois latérales de la structure de raidissement se rétrécissent vers l'extérieur à partir de la première paroi jusqu'à la surface de la porte.

5. Ensemble porte selon l'une quelconque des revendications 1 à 4, dans lequel les secondes parois latérales se rétrécissent vers l'extérieur à partir de la paroi supérieure jusqu'à leurs bords distaux opposés à la paroi supérieure (210).

6. Ensemble porte selon l'une quelconque des revendications 1 à 5, dans lequel :
la structure de raidissement (202) comprend une pluralité d'éléments de raidissement reliés orientés dans de multiples directions différentes, et
l'au moins une partie de la structure de raidissement (202) qui est située dans le volume comprend une pluralité des éléments de raidissement orientés dans de multiples directions différentes.

7. Ensemble porte selon l'une quelconque des revendications 1 à 6, dans lequel la paroi supérieure (210) a une forme choisie dans le groupe de formes constitué par : une forme en H, une forme en I, une forme en C, une forme en S, une forme en J, une forme en L, une forme en T, une forme en U, une forme en F, une forme en Y et une forme en X.

8. Ensemble porte selon l'une quelconque des revendications 1 à 7, dans lequel la structure de raidissement (202) comprend un matériau composite renforcé par des fibres thermoplastiques.

9. Ensemble porte selon l'une quelconque des revendications 1 à 8, dans lequel la structure de raidissement (202) comprend un matériau composite renforcé de fibres courtes comprenant des fibres courtes incorporées dans une matrice polymère, les fibres courtes ayant des longueurs inférieures ou égales à 50 mm.

10. Ensemble porte selon l'une quelconque des revendications précédentes, dans lequel chaque saillie de la pluralité de saillies (802) a une longueur inférieure ou égale à 1 mm.

11. Ensemble porte selon l'une quelconque des revendications 1 à 10, dans lequel l'organe charnière est un organe charnière en métal ou en alliage produit à l'aide d'un processus de fabrication additive.

12. Ensemble porte selon l'une quelconque des revendications 1 à 11, dans lequel le véhicule est un aéronef (100) et la porte est une porte d'aéronef (102).

13. Véhicule comprenant un ensemble porte selon l'une quelconque des revendications 1 à 12.

14. Procédé de fabrication d'un ensemble porte pour un véhicule, le procédé comprenant :
la fourniture d'une structure de raidissement (202), la structure de raidissement comprenant une première paroi et des premières parois latérales s'étendant à partir de la première paroi ;
la fourniture d'un organe charnière (106) comprenant une portion base (204) et un bras de charnière (206) s'étendant à partir de la portion base, la portion base comprenant une paroi supérieure (210) et des secondes parois latérales s'étendant à partir de la paroi supérieure, la paroi supérieure et les secondes parois latérales définissant un volume ;
l'assise de l'organe charnière sur le dessus de la structure de raidissement (202) et la localisation d'au moins une partie de la structure de raidissement dans le volume ;
le collage de surfaces externes des premières parois latérales à des surfaces internes des secondes parois latérales par l'intermédiaire de surfaces de collage, sans utiliser d'attaches mécaniques ; et
la fixation de la structure de raidissement (202) à une surface de la porte de telle sorte que la première paroi est espacée de la surface de la porte et sensiblement parallèle à celle-ci, et les premières parois latérales s'étendent entre la première paroi et la surface de la porte ; dans lequel
la surface de collage de la surface interne d'une seconde paroi latérale comprend une pluralité de saillies (802) qui s'étendent dans la structure de raidissement, dans lequel les saillies ont une longueur inférieure égale à 2 mm.
